# EUROPÄISCHE PATENTSCHRIFT

(11) **EP 0 574 898 B1**
(45) Veröffentlichungstag und Bekanntmachung des Hinweises auf die Patenterteilung: **22.05.1996**
(21) Anmeldenummer: 93109627.5
(22) Anmeldetag: 16.06.1993
(51) Int. Cl.: B23H 7/08

(54) **Elektroerosions-Schneidevorrichtung und Elektroerosions-Schneideverfahren**
Wire electrical discharge machining process and apparatus
Procédé et appareil d'usinage par étincelles à fil

(30) Priorität: 16.06.1992 DE 4219712
(43) Veröffentlichungstag der Anmeldung: 22.12.1993
(73) Patentinhaber: AG für industrielle Elektronik AGIE Losone bei Locarno, CH-6616 Losone/Locarno (CH)
(72) Erfinder: Marsicovetere, Roland, CH-3123 Belp (CH); Angelella, Stefano, CH-6616 Losone (CH)
(74) Vertreter: von Samson-Himmelstjerna, Friedrich R., Dipl.-Phys.

(56) Entgegenhaltungen:
- EP-A- 0 173 786
- DE-A- 2 440 564
- DE-A- 3 319 935
- PATENT ABSTRACTS OF JAPAN vol. 001, no. 074 (M-026)16. Juli 1977 & JP-A-52 020 499 (INOUE JAPAX RES INC)16 Februar 1977
- PATENT ABSTRACTS OF JAPAN vol. 8, no. 158 (M-311)21. Juli 1984 & JP-A-59 053 128 ( INOUE JAPAX KENKYUSHO K.K.)27 März 1984

## Beschreibung

Die Erfindung betrifft eine Vorrichtung und ein Verfahren zum elektroerosiven Schneiden eines Werkstückes nach den Oberbegriffen der Ansprüche 1 und 9.

Derartige Elektroerosions-Schneidevorrichtungen und Elektroerosions-Schneideverfahren sind seit langem in den vielfältigsten Ausführungsformen bekannt. So ist es beispielsweise bekannt, den Erodierdraht vor seinem Eintritt in den Arbeitsspalt durch eine Durchmesser-Kalibriereinrichtung zu ziehen, um hierdurch einen konstanten Drahtdurchmesser sicher zu stellen. Ferner ist es bei automatischen Erodierdraht-Kalibriereinrichtungen bekannt, die Drahtspitze vor ihrem Einfädeln auszuglühen, zu strecken und/oder abzuschrecken. Hierdurch soll die Drahtspitze steifer gemacht und damit deren Einfädeln, etwa in ein Startloch, erleichtert werden.

Im übrigen weist eine Elektroerosions-Schneidevorrichtung weist üblicherweise folgende Grundelemente auf: ein Maschinengestell mit Antrieben und Drahtsystem, ein Spülsystem, einen Generator sowie eine NC- oder CNC-Rechnersteuerung.

Ausgehend von einer Startbohrung oder einer Referenzfläche wird mit einer ersten Elektrode - dem Erodierdraht - eine Kontur in bzw. aus dem Werkstück - der zweiten Elektrode - geschnitten.

In der DE-OS 33 19 935 A1 wird vermutet, daß der Erodierdraht bei der Erosion Luftblasen in den Arbeitsspalt hineinreißt, somit nicht überall benetzt wird, hierdurch lokale Erhitzungen erfährt und deswegen leicht reißt. Um diesem Effekt gegenzuwirken, wird der Erodierdraht vor seinem Eintritt in die Arbeitszone mit einer Bürste abgebürstet. Als zusätzliche Alternative besprüht eine Sprüheinheit den Draht mit einer Flüssigkeit, etwa reinem Wasser, das mit Hilfe eines Ultraschallgenerators in Ultraschallschwingungen versetzt wird. Die Bürste und die Sprüheinheit in Verbindung mit dem Ultraschallgenerator dienen der Reinigung des Drahtes. In der Schrift wird der Standpunkt vertreten, daß diese Reinigungsmaßnahmen die Benetzbarkeit des sich bewegenden Elektrodendrahtes deutlich erhöhen. Infolgedessen reißt der Schneiddraht nur ganz wenig Luft auf der Oberfläche mit. Insgesamt wird hierdurch eine verbesserte Kühlung des Elektrodendrahtes im Schneidbereich erzielt und die Drahtrißgefahr herabgesetzt.

Aus der EP 0 173 786 A1 ist es bekannt, zur Erhöhung der Schnittleistung einer Drahterodiermaschine den Elektrodendraht vor Eintritt in die Arbeitszone kalt zu verformen und dabei zu kalibrieren. Hierzu dienen mehrere Draht-Ziehsteine. Weiterhin wird vorgeschlagen, die Kaltverformbarkeit und die Drahtrißgefahr eines wenigstens 50 % Zink oder Cadmium enthaltenden Elektrodendrahtes durch folgende Maßnahme zu verbessern: Der Elektrodendraht wird vor seinem Eintritt in die Draht-Ziehsteine in einem Heizkasten auf wenigstens 600°C aufgeheizt. Hierdurch wird seine Oberfläche in eine Zink- oder Cadmium-Oxidschicht umgewandelt. Diese Oxidschicht ist es, welche die Kaltverformbarkeit verbessert, die Drahtrißgefahr reduziert und im Ergebnis zu einer höheren Schnittleistung führt.

Die DE-PS 24 40 564 C2 beschreibt eine Drahterodiermaschine, bei welcher der Erodierdraht vor Eintritt in den Arbeitsspalt aus - und geradegerichtet, ggf. auch noch kalibriert wird. Hierzu durchläuft der Elektrodendraht vor Eintritt in den Arbeitsspalt eine Erwärmzone und danach eine Kühlzone. Die Kalibrierung erfolgt mittels Ziehsteinen, die vor der Erwärmzone angeordnet sind. Bei einem Ausführungsbeispiel durchläuft der Elektrodendraht vor Eintritt in die Erwärmzone auch noch ein Bad mit einer nicht weiter spezifizierten Reinigungsflüssigkeit. In der Erwärmzone kann der Erodierdraht unmittelbar mit elektrischem Strom beaufschlagt und hierdurch insgesamt erwärmt werden. Dabei können die Innenwände der Wärmzone so ausgelegt sein, daß sie die Wärmestrahlung, reflektieren. Alternativ kann der Elektrodendraht induktiv aufgeheizt werden, nämlich über einen HF-Generator, der eine den Elektrodendraht umgebende Wicklung speist. Eine Oxidation der Oberfläche findet nicht statt. Es wird nämlich nur in dem Maße erwärmt, daß das Gerade- und Ausrichten erleichtert wird.

Aus der JP-A 52-20499 ist es bekannt, Grate und "Schuppen" bzw. Krusten vom Erodierdraht zu entfernen, welche bei dessen Herstellung entstehen. Es soll verhindert werden, daß diese Grate oder "Schuppen" vom Erodierdraht abfallen und die Drahtführungen und den Arbeitsspalt verschmutzen, was zu ungenauen Schneidevorgängen oder Kurzschlüssen im Arbeitsspalt und damit auch zu Erodierdrahtrissen führen kann. Hierzu wird der Erodierdraht durch ein (elektro)chemisches Bad geführt und über eine elektrolytische bzw. chemische Behandlung gesäubert und "(elektro)chemisch geschliffen". Für die elektrochemische Behandlung werden positive und negative Elektroden jeweils an den Erodierdraht und an das elektrochemische Bad gelegt. Der dabei fließende elektrolytische Strom entfernt insbesondere die Grate des Erodierdrahtes aufgrund der dort besonders stark ausgeprägten Feldspitzen des elektrischen Feldes.

Beim elektroerosiven Schneiden wachsen ständig die Anforderungen an Abtragsleistung, Genauigkeit des Schnittes und Oberflächengüte des bearbeiteten Werkstückes.

Die vorliegende Erfindung zielt darauf ab, die Schnittgenauigkeit beim elektroerosiven Schneiden zu erhöhen.

Sie erreicht dieses Ziel dadurch, daß sie bei einer Vorrichtung zum elektroerosiven Schneiden eines Werkstückes mittels eines Erodierdrahtes, die eine relativ zur Drahttransportrichtung vor dem Werkstück angeordnete Einrichtung zur Vorbehandlung des Erodierdrahtes aufweist, die Vorbehandlungseinrichtung für eine, bevorzugt thermische und/oder chemische,
Entfernung einer nichtmetallischen Schutzschicht und/oder einer metallischen Beschichtung, bevorzugt einer Zink-, Zinn-, und/oder Silberbeschichtung, des Erodierdrahtes auslegt und/oder indem die Einrichtung Mittel zum thermischen Diffundieren, insbesondere bereits vorhandener Stoffe, in der Drahtoberfläche aufweist.

Die Erfindung erreicht ihr Ziel ferner durch ein Verfahren zum elektroerosiven Schneiden eines Werkstückes mittels eines Erodierdrahtes, der vor seinem Eintritt in das Werkstück vorbehandelt, bevorzugt thermisch und/oder chemisch vorbehandelt, insbesondere gereinigt und/oder oberflächenbehandelt wird, wobei während der Vorbehandlung eine nichtmetallische Schutzschicht und/oder eine metallische Beschichtung, bevorzugt eine Zink-, Zinn-, und/oder Silberbeschichtung, vom Erodierdraht entfernt wird und/oder Stoffe, insbesondere bereits im Oberflächenbereich vorhandene Stoffe, in der Drahtoberfläche thermisch diffundiert werden.

Mit den bevorzugten thermischen und chemischen Prozessen ist es unkompliziert möglich, metallische und/oder nichtmetallische Oberflächenschichten verschiedensten Materials vom Erodierdraht zu entfernen. Ferner können bereits im Oberflächenbereich vorhandene Stoffe in der und/oder in die Drahtoberfläche thermisch diffundiert werden.

Keine der im Stand der Technik genannten Druckschriften stellt auf ein Entfernen einer nichtmetallischen Schutzschicht oder metallischen Schicht des Erodierdrahtes vor dessen Eintritt in den Arbeitsspalt ab, ausgenommen eine Schmutzschicht, die aber natürlich nicht als "Schutzschicht" zu interpretieren ist.

Zusammengefaßt ermöglicht es die Erfindung, die Oberflächenbeschaffenheit des Erodierdrahtes vor dem Eintritt des Erodierdrahtes in die Erosionszone gezielt zu verändern bzw. zu beeinflußen. Bei einer geeigneten Wahl der Behandlungsparameter (Schichtentfernen/Diffusion) ist die Oberflächengüte des Erodierdrahtes so steuer- bzw. einstellbar, daß die Schnittgenauigkeit des Erodierdrahtes gegenüber dem Stand der Technik erhöhbar ist.

Die Erfindung mindert bei einer geeigneten Parameterwahl auch die weiteren vorstehend genannten Probleme der elektroerosiven Bearbeitung. So können die Abtragsleistung beim Erodieren und die Oberflächengüte einer geschnittenen Werkstückseite durch ein die neuartige Vorbehandlung des Erodierdrahtes erhöht und verbessert werden.

Die Erfindung macht sich einen bisher in der Elektroerosion trotz aller Anstrengungen noch vernachlässigten Effekt zu nutze: die Oberflächenbeschaffenheit des Erodierdrahtes.

Zwar ist der Einfluß des Erodierdrahtes auf das Ergebnis der Erosion natürlich prinzipiell bekannt. So ist es zum Beispiel üblich, je nach Material des zu schneidenden Werkstückes ein dazu passendes Erodierdrahtmaterial oder einen Erodierdraht mit einer bestimmten Legierung auszuwählen. Derartige Auswahlvorgänge betreffen jedoch stets "externe" Auswahlvorgänge außerhalb der Elektroerosions-Schneidevorrichtung.

Neu ist dagegen die Überlegung, den letztendlich ausgewählten Erodierdraht in der Elektroerosions-Schneidevorrichtung vor seinem Eintritt in die Bearbeitungszone einer Oberflächenvorbehandlung im Sinne eines Entfernens ungewünschter Schutz- oder Metallschichten und/oder eines Diffusionsprozesses zu unterziehen (Die Diffusion erfolgt insbesondere im Temperaturbereich von 500 bis 900°C, bevorzugt findet sie im Temperaturbereich von 500 bis 590°C statt). Dies ist deshalb besonders sinnvoll, da Erodierdrähte oftmals nicht in einer endgültig brauchbaren Form vom Hersteller geliefert werden. So sind die Erodierdrähte rund um ihren Kern häufig mit einer diffundierten Zinkschicht versehen, die u.U. jedoch mangelhaft eindiffundiert ist. Über der Zink-Diffusionsschicht weisen die Erodierdrähte oftmals noch eine weitere ca. 0,3 µm dicke metallische Beschichtung - z.B. aus Silber - auf, die u.a. als Korrisionsschutz dient.

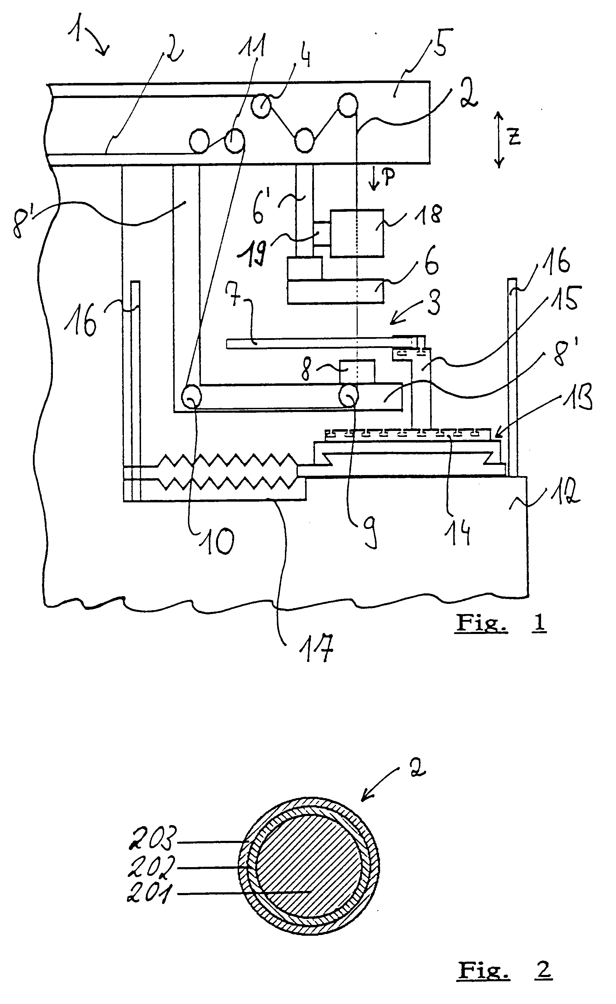

Eine derartige Silberschicht ist beispielsweise für ein sicheres Antasten durchaus nützlich. Ein Entfernen der Silberschicht ist jedoch während des Erodierprozeßes an sich sinnvoll, da die Silberschicht den Erodierprozeß behindern und Verunreinigungen beim Schneiden hervorrufen kann. Zusätzlich kann der Draht noch von einer Schmutzschicht umgeben sein. Ein Beispiel eines derartigen dreilagigen Erodierdrahtes zeigt Fig. 2. Ein Kern aus CuZn 37 ist zuerst von einer eindiffundierten Zinkschicht und dann noch von einer äußeren Silberschicht umgeben. Offenbar hat man sich bisher in der Erodiertechnik mit dem Eintreten derartiger Drähte in den Erodierspalt zufrieden gegeben, wenngleich versucht wurde, auf die Herstellung des Erodierdrahtes Einfluß zu nehmen. Mit der vorliegenden Erfindung ist es dagegen möglich, die Erodierdrahtgüte in hohem Maße noch nach dem Einlegen des Erodierdrahtes in die Elektroerosions-Schneidevorrichtung beim bzw. kurz vor dem Schneiden zu steuern und zu kontrollieren.

Auch mit der Diffusion von Stoffen geht die Erfindung über ein bloßes Reinigen des Drahtes im engeren Sinne des Entfernens von Schmutz oder störenden Schutzschichten hinaus. Bei der Diffusion wird keine Schicht vom Erodierdraht entfernt, sondern die Güte einer beispielsweise fehlerhaft diffundierten Schicht verbessert. Das Diffundieren dient somit ebenfalls im besonderen Maße der Erhöhung der Oberflächengüte des Drahtes - und damit dem gemeinsamen Obergedanken der Erfindung.

Bei einer bevorzugten Variante der Erfindung ist die Einrichtung derart ausgelegt, daß sie den Erodierdraht im wesentlichen lediglich an seiner Oberfläche erhitzt (Anspruch 4).

Bei einer weiteren bevorzugten Ausführungsform der Erfindung weist die Einrichtung Mittel zum Verdampfen der nichtmetallischen Schutzschicht und/oder der metallischen Beschichtung(en) auf (Ansprüche 5 und 12). Ein Verdampfen stellt eine besonders einfach zu realisierende Variante der Erfindung dar. Als Verdampfungsmittel kann beispielsweise eine Heizwendel zum Ausheizen oder Ausglühen der Oberflächenzone des Erodierdrahtes vorgesehen sein. Zusätzlich, alternativ oder kombiniert mit dem Verdampfungsmittel kann die Einrichtung in vorteilhafter Weise Mittel zum Verkoken einer Schmutzschicht und/oder der metallischen Beschichtung(en) aufweisen (Ansprüche 6 und 13).

Weitere bevorzugte Varianten des erfindungsgemäßen Verfahrens sind in den Ansprüchen 14 bis 21 angegeben. Die Einrichtung weist dabei vorteilhaft einen - insbesondere in seiner Frequenz steuerbaren - Hochfrequenzsender, einen Ultraschallsender, einen Strahler (insbesondere im Infrarotbereich), eine Sprüheinrichtung oder ein Bad auf. Auf den Erodierdraht wirken praktisch keine oder nur so geringe mechanische Kräfte ein, daß die Erosion nicht durch Schwingungen, Vibrationen o.ä. Effekte gestört wird.

Bei einer anderen besonders bevorzugten Ausgestaltung der Erfindung ist die Einrichtung an einen numerischen Steuerungsrechner angeschlossen (Anspruch 7). Dabei ist es weiterhin besonders vorteilhaft, wenn der Steuerungsrechner zum Steuern der Einrichtung in Abhängigkeit des Betriebszustandes der Elekroerosions-Schneidevorrichtung ausgelegt ist (Anspruch 8). Hierzu ist eine Funktion in die Software des Steuerungsrechners integriert. Damit werden besonders interessante Varianten der Erfindung realisierbar: so ist es nunmehr möglich, die Oberflächengüte des Erodierdrahtes in Abhängigkeit der Schnittparameter
zu variieren und je nach Wunsch verschiedene Betriebszustände miteinander zu kombinieren.

Als besonders vorteilhafte Variante des erfindungsgemäßen Elektroerosions-Schneideverfahrens hat es sich erwiesen, daS die Einrichtung derart von einem numerischen Steuerungsrechner gesteuert wird, daß bei einem Abtasten nur Schmutz verkokt, beim elektroerosiven Schneiden mehrere Reinigungs- und/oder Oberflächen-Behandlungsprozesse durchgeführt, und bei einem Programmcheck die Einrichtung ausgeschaltet wird (Anspruch 21). Damit ist auf unkomplizierte Weise sichergestellt, daß die Einrichtung nicht überflüssig in Betrieb ist oder gar einen Einfädelungsprozeß stört.

Weitere bevorzugte Merkmale der Erfindung ergeben sich außerdem aus der nachfolgenden Beschreibung eines bevorzugten Ausführungsbeispieles. Das Ausführungsbeispiel ist schematisch in der beigefügten Zeichnung dargestellt. In der Zeichnung zeigen:
- Fig. 1: eine schematische Ansicht einer erfindungsgemäßen Elektroerosions-Schneidevorrichtung;
- Fig. 2: einen Querschnitt durch einen bekannten Erodierdraht.

Zunächst sei Fig. 1 beschrieben. Dabei wird im folgenden eine Terminologie verwendet, die der leichteren Lesbarkeit der Beschreibung dient, jedoch nicht einschränkend zu verstehen ist. Beispielsweise beziehen sich die Ausdrücke oben, unten, schmaler, breiter auf Maschinen üblicher Arbeitsaufstellung und Größe sowie auf in üblicher Weise angeordnete Werkstücke.

In Fig. 1 ist eine Elektroerosions-Schneidevorrichtung bzw. eine Drahterosionsmaschine 1 zum funkenerosiven Schneiden bzw. Bearbeiten eines Werkstückes 7 dargestellt. Fig. 1 beschränkt sich der Übersichtlichkeit halber auf eine Darstellung hier interessierender Teile einer Drahterosionsmaschine. Grundelemente wie Spülsystem, Generator und CNC-Rechnersteuerung sind nicht dargestellt, da sie als selbstverständlich gelten.

Ein Erodierdraht 2 - auch Drahtelektrode genannt - wird in der durch einen Pfeil **P** dargestellten Drahttransportrichtung durch den Arbeitsbereich 3 gezogen, hier von "oben" nach "unten". Dabei wird der Erodierdraht 2 üblicherweise von einer (ebenfalls nicht dargestellten) Vorratsdrahtrolle abgezogen und zunächst von Führungsrollen 4, die an der Außenseite eines oberen Schenkels 5 einer C-gestellartigen Drahterosionsmaschine 1 befestigt sind, geführt. Nach Durchlaufen der Führungsrollen 4 wird die Drahtelektrode 2 im wesentlichen vertikal nach unten in Richtung der Bearbeitungszone 3 der Drahterosionsmaschine 1 weitergeführt. Dabei durchläuft die Drahtelektrode 3 in üblicher Weise eine vertikale Öffnung eines oberen Führungskopfes 6. Der obere Führungskopf 6 ist nach Art eines sogenannten U-V-Schlittens über einen oberen Führungsarm 6' mit dem oberen Schenkel 5 verbunden und zusätzlich auch vertikal in Z-Richtung verfahr- und einstellbar. Üblicherweise weist der obere Führungskopf 6 in seinem Inneren eine (in Fig. 1 nicht dargestellte) Stromzuführung zum Zuführen von Generatorimpulsen, eine Drahtführung und eine Spülmittelzuführung auf. Der Führungskopf 6 mündet in eine Spüldüse, die für eine optimale Umströmung des Erodierdrahtes 2 mit dem Spülmittel, d.h. mit dem für den funkenerosiven Prozeß nötigen Dielektrikum sorgt. Eine optimale Spülung stellt definierte, gleichbleibende elektrische Verhältnisse im Arbeitsspalt sicher (Isolation des Werkstückes 7 von der Elektrode 2, die für den funkenerosiven Prozeß notwendige Ionisation, die Kühlung, der Abtransport der Abtragpartikel aus dem Spalt etc.).

Die Drahtelektrode 2 gelangt nach ihrem Durchlauf durch das Werkstück 7 in einen unteren Führungskopf 8, der an einem unteren Führungsarm 8' montiert ist und analog zum oberen Führungskopf 6 aufgebaut ist. Umlenkrollen 9 und 10 am unteren Führungsarm 8' und Führungsrollen 11 am Schenkel 5 leiten schließlich die Drahtelektrode 3 in bekannter Weise zu einem in der Fig. 1 nicht mehr dargestellten Aufnahmebehälter für verbrauchte Drahtelektroden 2.

Im Ausführungsbeispiel der Fig. 1 sind die beiden Führungsarme 6' und 8' und die damit verbundenen Führungsköpfe 6 und 8 am oberen Schenkel 5 der Drahterosionsmaschine 1 angeordnet.

Während des elektroerosiven Schneidevorganges ist die Drahtelektrode 2 zwischen dem Schenkel 5 und dem unteren Führungsarm 8 im wesentlichen vertikal gespannt. Mit Hilfe des oberen Führungskopfes 6 kann eine weitere Spannung bzw. eine definierte Endjustierung des Erodierdrahtes 2 gegenüber dem Werkstück 7 erfolgen.

Ein unterer Schenkel 12 der C-gestellartigen Drahterosionsmaschine 1 bildet den sogenannten Festtisch der Maschine. Auf dem Festtisch ist ein X-Y-Tisch 13 gelagert, der in X- bzw. Y-Richtung verfahrbar ist. Auf dem X-Y-Tisch 13 ist eine Aufspannplatte 14 angeordnet, die wiederum eine Befestigungs- bzw. Aufspannvorrichtung 15 für das Werkstück 7 trägt. Das Werkstück 7 wird vom Erodierdraht 2 zwischen oberem Führungskopf 6 und unterem Führungskopf 8 elektroerosiv berarbeitet.

Die Bearbeitungszone 3 wird im wesentlichen durch vertikale Seitenwände 16 sowie einen Boden 17 - die zusammen einen nach oben offenen Behälter bilden - dargestellt.

Aus der vorstehenden Beschreibung wird bereits deutlich, daß sich für den äußeren Beobachter bzw. den Bediener der Maschine der Erodiervorgang nicht aufwendiger darstellt als bei bekannten Elektroerosions-Schneidevorrichtungen und Elektroerosions-Schneideverfahren. Der wesentliche Unterschied steckt in folgendem Detail: Vor dem Eintritt des Erodierdrahtes 2 in das Werkstück 7, in diesem Fall sogar bereits vor Erreichen des oberen Führungskopfes 6, durchläuft der Erodierdraht 2 eine neuartig ausgestaltete Einrichtung 18 zur Reinigung und Oberflächenbehandlung.

Die Einrichtung 18 ist im Ausführungsbeispiel der Fig. 1 - rein schematisch dargestellt - über einen Arm 19 in ausreichender Höhe am oberen Führungsarm 6' befestigt. Sie kann alternativ natürlich auch bereits kurz hinter der (nicht dargestellten) Drahtspule oder im Bereich der Umlenkrollen angeordnet sein: dem Techniker stehen je nach Bauart und Auslegung der Maschine viele unkomplizierte Realisierungsmöglichkeiten offen.

In der Einrichtung 18 wird der Erodierdraht 2 vor dem Einlauf in die Erosionszone einer thermischen und/oder chemischen Behandlung unterzogen, welche die Drahtoberfläche in die gewünschte Qualität bringt.

Fig. 2 zeigt den Erodierdraht 2 mit dem vorstehend bereits beschriebenen dreilagigen Aufbau aus einem CuZn37-Kern 201, einer diffundierten Zinkschicht 202 und einer Versilberung 203. Zusätzlich kann der Erodierdraht noch von nichtmetallischen Schutz- und/oder Schmutzschichten umgeben sein (nicht dargestellt).

In der Einrichtung 18 wird nun z.B. parallel oder nacheinander
- die Schmutzschicht verkokt,
- die nicht metallische Schutzschicht verdampft,
- die Metallschicht 203, hier also die Versilberung, verdampft, und
- die dann die Oberfläche bildende Schicht 202, hier die Zinkschicht, thermisch diffundiert.

Eine der wichtigsten Möglichkeiten, die sich durch die vorliegende Erfindung eröffnet, ist das Entfernen der oftmals unerwünschten Silberschicht 203.

Ein besonderer Witz der Erfindung liegt zusammengefaßt in der Idee, den Erodierdraht 2 lediglich an seiner Oberfläche zu erhitzen. Geeignet sind beispielsweise Kurzzeiterhitzungen ("Schockerhitzungen") und - besonders vorteilhaft - HF-Erwärmungen (Skineffekt) zum Entfernen metallischer Schutzschichten. Die Erwärmung der metallischen Schutzschichten verdampft dann - sozusagen indirekt - auch nichtmetallische Schmutzschichten. Dabei hat es sich als vorteilhaft erwiesen, wenn das zur Erwärmung genutzte induktive HF-Wechselfeld in seiner Frequenz abstimmbar ist. Über die Frequenz ist es nämlich möglich, die Eindringtiefe des Wechselfeldes in den Draht - und damit die Tiefenwirkung der Erwärmung - zu steuern. Bei einer geeigneten Abstimmung der HF-Frequenz ist es dann sogar möglich, das Verdampfen der Versilberung und das Vergrößern der diffundierten Zinkschicht mit einer einzigen Erwärmung präzise gesteuert gleichzeitig durchzuführen. Da die Erwärmung des Drahtes auf den Oberflächenbereich beschränkt bleibt, sind zusätzliche Kühlvorgänge i.A. nicht erforderlich. Sie können aber förderlich für einen schnellen Abtransport der Wärme sein. Die üblicherweise zur Spülung und Kühlung des Erodierdrahtes verwendete dielektrische Spülflüssigkeit ist hier besonders vorteilhaft. Sie ist nämlich im Vergleich zum Erodierdraht praktisch nicht-leitend. In ihr treten deshalb bei einer HF-Erhitzung keine Ströme auf, obwohl sie körperlichen Kontakt mit dem Erodierdraht hat und sozusagen dessen äußerste Oberflächenschicht bildet. Sie erwärmt sich daher bei einer HF-Erhitzung nicht. Ihr Kühleffekt bleibt also voll erhalten.

Durch einen (nicht dargestellten) Anschluß der Einrichtung 18 an den CNC-Steuerungscomputer ist es möglich, manuell oder automatisch die Art der Drahtbehandlung in der Einrichtung 18 umzuschalten. Beispielsweise ist es sinnvoll bei einem Antasten nur Schmutz zu verkoken und beim eigentlichen Erodieren die Einrichtung 18 voll einzuschalten. Bei einem Programmcheck ist es dagegen sinnvoll, die Einrichtung 18 auszuschalten.

## Patentansprüche

1. Vorrichtung (1) zum elektroerosiven Schneiden eines Werkstückes (7) mittels eines Erodierdrahtes (2), die eine relativ zur Drahttransportrichtung (P) vor dem Werkstück (7) angeordnete Einrichtung (18) zur Vorbehandlung des Erodierdrahtes (2) aufweist, dadurch gekennzeichnet, daß die Einrichtung (18) für eine Entfernung einer nichtmetallischen Schutzschicht und/oder einer metallischen Beschichtung (203) des Erodierdrahtes (2) ausgelegt ist und/oder Mittel zum thermischen Diffundieren von Stoffen in der Drahtoberfläche aufweist.

2. Vorrichtung nach Anspruch 1, dadurch gekennzeichnet, daß die Einrichtung (18) für eine thermische und/oder chemische Entfernung der nichtmetallischen Schutzschicht und/oder der metallischen Beschichtung (203) des Erodierdrahtes (2) ausgelegt ist.

3. Vorrichtung nach Anspruch 1 oder 2, dadurch gekennzeichnet, daß die Einrichtung (18) für eine thermische und/oder chemische Entfernung einer Zink-, Zinn-, und/oder Silberbeschichtung ausgelegt ist.

4. Vorrichtung nach Anspruch 1, dadurch gekennzeichnet, daß die Einrichtung (18) derart ausgelegt ist, daß sie den Erodierdraht (2) lediglich an seiner Oberfläche erhitzt.

5. Vorrichtung nach einem der vorstehenden Ansprüche, dadurch gekennzeichnet, daß die Einrichtung (18) Mittel zum Verdampfen der nichtmetallischen Schutzschicht und/oder der metallischen Beschichtung(en) (203) aufweist.

6. Vorrichtung nach einem der vorstehenden Ansprüche, dadurch gekennzeichnet, daß die Einrichtung (18) Mittel zum Verkoken einer Schmutzschicht und/oder der metallischen Beschichtung(en) (203) aufweist.

7. Vorrichtung nach einem der vorstehenden Ansprüche, dadurch gekennzeichnet, daß die Einrichtung (18) an einen numerischen Steuerungsrechner angeschlossen ist.

8. Vorrichtung nach Anspruch 7, dadurch gekennzeichnet, daß der Steuerungsrechner zum Steuern der Einrichtung (18) in Abhängigkeit des Betriebszustandes der Elektroerosions-Schneidevorrichtung (1) ausgelegt ist.

9. Verfahren zum elektroerosiven Schneiden eines Werkstückes (7) mittels eines Erodierdrahtes (2), der vor seinem Eintritt in das Werkstück (7) vorbehandelt wird, dadurch gekennzeichnet, daß während der Vorbehandlung eine nichtmetallische Schutzschicht und/oder eine metallische Beschichtung (203) vom Erodierdraht (2) entfernt wird und/oder Stoffe in der Drahtoberfläche thermisch diffundiert werden.

10. Verfahren nach Anspruch 9, dadurch gekennzeichnet, daß während der Vorbehandlung die nichtmetallische Schutzschicht und/oder die metallische Beschichtung (203) thermisch und/oder chemisch vom Erodierdraht (2) entfernt wird/werden.

11. Verfahren nach Anspruch 9 oder 10, dadurch gekennzeichnet, daß während der Vorbehandlung eine Zink-, Zinn-, und/oder Silberbeschichtung vom Erodierdraht (2) entfernt wird/werden.

12. Verfahren nach einem der Ansprüche 9 bis 11, dadurch gekennzeichnet, daß die nichtmetallischen Schutzschicht(en) und/oder die metallischen Beschichtung(en) (203) insbesondere durch Erhitzen der Oberfläche des Erodierdrahtes (2) verdampft wird/werden.

13. Verfahren nach einem der Ansprüche 9 bis 12, dadurch gekennzeichnet, daß eine Schmutzschicht und/oder die metallischen Beschichtung(en) (203) verkokt wird.

14. Verfahren nach einem der Ansprüche 9 bis 13, dadurch gekennzeichnet, daß zur Reinigung und/oder Oberflächenbehandlung des Erodierdrahtes ein Hochfrequenzfeld verwendet wird.

15. Verfahren nach Anspruch 14, dadurch gekennzeichnet, daß die Frequenz des Hochfrequenzfeldes variiert wird.

16. Verfahren nach einem der Ansprüche 9 bis 13, dadurch gekennzeichnet, daß zur Reinigung des Erodierdrahtes Ultraschall verwendet wird.

17. Verfahren nach einem der Ansprüche 9 bis 13, dadurch gekennzeichnet, daß zur Reinigung und/oder Oberflächenbehandlung des Erodierdrahtes Infrarotstrahlung verwendet wird.

18. Verfahren nach einem der Ansprüche 9 bis 13, dadurch gekennzeichnet, daß zur Reinigung und/oder Oberflächenbehandlung des Erodierdrahtes ein Besprühverfahren verwendet wird.

19. Verfahren nach Anspruch 18, dadurch gekennzeichnet, daß der Erodierdraht mit einem Gas besprüht wird.

20. Verfahren nach einem der Ansprüche 9 bis 13, dadurch gekennzeichnet, daß zur Reinigung und/oder Oberflächenbehandlung des Erodierdrahtes ein Bad verwendet wird.

21. Verfahren nach einem der Ansprüche 9 bis 20, dadurch gekennzeichnet, daß die Einrichtung (18) derart von einem numerischen Steuerungsrechner gesteuert wird, daß
- bei einem Abtasten nur Schmutz verkokt,
- beim elektroerosiven Schneiden mehrere Reinigungs- und/oder Oberflächen-Behandlungsprozesse durchgeführt, und
- bei einem Programmcheck die Einrichtung (18) ausgeschaltet wird.

## Claims

1. An apparatus (1) for the electrical discharge machining of a workpiece (7) by means of an EDM wire (2), which comprises a device (18), disposed in front of the workpiece (7) in relation to the wire transport direction (P), for the preliminary treatment of the EDM wire (2), **characterised in that** the device (18) is designed to remove a non-metallic protective layer and/or a metallic coating (203) of the EDM wire (2) and/or comprises means for thermally diffusing substances in the wire surface.

2. An apparatus according to Claim 1,
**characterised in that** the device (18) is designed for thermally and/or chemically removing the non-metallic protective layer and/or the metallic coating (203) of the EDM wire (2).

3. An apparatus according to Claim 1 or 2,
**characterised in that** the device (18) is designed for thermally and/or chemically removing a zinc, tin and/or silver coating.

4. An apparatus according to Claim 1,
**characterised in that** the device (18) is designed so that it heats the EDM wire (2) only at its surface.

5. An apparatus according to one of the preceding Claims,
**characterised in that** the device (18) comprises means for vaporising the non-metallic protective layer and/or the metallic coating(s) (203).

6. An apparatus according to one of the preceding Claims,
**characterised in that** the device (18) comprises means for carbonising a layer of dirt and/or the metallic coating(s) (203).

7. An apparatus according to one of the preceding Claims,
**characterised in that** the device (18) is connected to a numerical control computer.

8. An apparatus according to Claim 7,
**characterised in that** the control computer is designed to control the device (18) in dependence on the operating status of the electrical discharge machining device (1).

9. A process for the electrical discharge machining of a workpiece by means of an EDM wire (2), which undergoes preliminary treatment before entering into the workpiece (7),
**characterised in that** during the preliminary treatment a non-metallic protective layer and/or a metallic coating (203) is removed from the EDM wire (2) and/or substances are thermally diffused in the wire surface.

10. A process according to Claim 9,
**characterised in that** during the preliminary treatment the non-metallic protective layer and/or the metallic coating (203) is/are thermally and/or chemically removed from the EDM wire (2).

11. A process according to Claim 9 or 10,
**characterised in that** a zinc, tin and/or silver coating of the EDM wire is/are removed from the wire (2) during the preliminary treatment.

12. A process according to one of Claims 9 to 11,
**characterised in that** the non-metallic protective layer(s) and/or the metallic coating(s) (203) is/are vaporised in particular by heating the surface of the EDM wire (2).

13. A process according to one of Claims 9 to 12,
**characterised in that** a layer of dirt and/or the metallic coating(s) is carbonized (203).

14. A process according to one of Claims 9 to 13,
**characterised in that** a high frequency field is used for the cleaning and/or surface treatment of the EDM wire.

15. A process according to Claim 14,
**characterised in that** the frequency of the high frequency field is varied.

16. A process according to one of Claims 9 to 13,
**characterised in that** ultrasound is used for cleaning the EDM wire.

17. A process according to one of Claims 9 to 13,
**characterised in that** infrared radiation is used for the cleaning and/or surface treatment of the EDM wire.

18. A process according to one of Claims 9 to 13,
**characterised in that** a spraying process is used for the cleaning and/or surface treatment of the EDM wire.

19. A process according to Claim 18,
**characterised in that** the EDM wire is sprayed with a gas.

20. A process according to one of Claims 9 to 13,
**characterised in that** a bath is used for the cleaning and the surface treatment of the EDM wire.

21. A process according to one of Claims 9 to 20,
**characterised in that** the device (18) is controlled by a numerical control computer in such a manner that :
- only dirt is carbonized during a scanning operation,
- during the EDM operation several cleaning and/or surface treatment processes are performed, and
- the device (18) is switched off during a program check.

## Revendications

1. Dispositif (1) de coupe électroérosive d'une pièce à usiner (7), au moyen d'un fil à érosion (2), qui présente un dispositif (18), utilisé pour le prétraitement à érosion (2), qui est placé devant la pièce à usiner (7) par rapport au dispositif de transport du fil (P), caractérisé en ce que le dispositif (18) est conçu pour un enlèvement d'une couche de protection non métallique et/ou d'un revêtement métallique (203) du fil à érosion (2), et/ou qui présente des moyens de diffusion thermique de matières à la surface du fil.

2. Dispositif selon la revendication 1, caractérisé en ce que le dispositif (18) est conçu pour un enlèvement thermique et/ou chimique de la couche de protection non métallique et/ou du revêtement métallique (203) du fil à érosion (2).

3. Dispositif selon la revendication 1 ou 2, caractérisé en ce que le dispositif (18) est conçu pour un enlèvement thermique et/ou chimique d'un revêtement en zinc, en étain et/ou en argent.

4. Dispositif selon la revendication 1, caractérisé en ce que le dispositif (18) est conçu de façon telle qu'il ne chauffe le fil à érosion (2) que sur sa surface.

5. Dispositif selon l'une quelconque des revendications précédentes, caractérisé en ce que le dispositif (18) présente des moyens servant à l'évaporation de la couche de protection non métallique et/ou du ou des revêtements métalliques (203).

6. Dispositif selon l'une quelconque des revendications précédentes, caractérisé en ce que le dispositif (18) présente des moyens servant à la cokéfaction d'une couche d'impuretés et/ou du ou des revêtements métalliques (203).

7. Dispositif selon l'une quelconque des revendications précédentes, caractérisé en ce que le dispositif (18) est connecté à un calculateur de commande numérique.

8. Dispositif selon la revendication 7, caractérisé en ce que le calculateur de commande est conçu pour commander le dispositif (18) en fonction du régime du dispositif de coupe par électroérosion (1).

9. Procédé de coupe électroérosive d'une pièce à usiner (7) au moyen d'un fil à érosion (2) qui, avant d'entrer dans la pièce à usiner (7), est prétraité, caractérisé en ce que, pendant le prétraitement, une couche de protection non métallique et/ou un revêtement métallique (203) est ou sont enlevé(s) du fil à érosion (2), et/ou en ce que des matériaux sont diffusés thermiquement à la surface du fil.

10. Procédé selon la revendication 9, caractérisé en ce que, pendant le prétraitement, la couche de protection non métallique et/ou le revêtement métallique (203) est ou sont enlevé(s) thermiquement et/ou chimiquement du fil à érosion (2).

11. Procédé selon la revendication 9 ou 10, caractérisé en ce que, pendant le prétraitement, un revêtement en zinc, en étain et/ou en argent est enlevé du fil à érosion (2).

12. Procédé selon l'une quelconque des revendications 9 à 11, caractérisé en ce que la ou les couches de protection non métalliques et/ou en ce que le ou les revêtements métalliques (203) est ou sont évaporé(s) notamment en chauffant la surface du fil à érosion (2).

13. Procédé selon l'une quelconque des revendications 9 à 12, caractérisé en ce qu'une couche d'impuretés et/ou le ou les revêtements métalliques (203) est cokéfié.

14. Procédé selon l'une quelconque des revendications 9 à 13, caractérisé en ce qu'un champ à haute fréquence est utilisé pour le nettoyage et/ou le traitement de surface du fil à érosion.

15. Procédé selon la revendication 14, caractérisé en ce que la fréquence du champ à haute fréquence varie.

16. Procédé selon l'une quelconque des revendications 9 à 13, caractérisé en ce que des ultrasons sont utilisés pour le nettoyage du fil à érosion.

17. Procédé selon l'une quelconque des revendications 9 à 13, caractérisé en ce qu'un rayonnement infrarouge est utilisé pour le nettoyage et/ou le traitement de surface du fil à érosion.

18. Procédé selon l'une quelconque des revendications 9 à 13, caractérisé en ce qu'un procédé de pulvérisation est utilisé pour le nettoyage et/ou le traitement de surface du fil à érosion.

19. Procédé selon la revendication 18, caractérisé en ce que le fil à érosion est pulvérisé avec un gaz.

20. Procédé selon l'une quelconque des revendications 9 à 13, caractérisé en ce qu'un bain est utilisé pour le nettoyage et/ou le traitement de surface du fil à érosion.

21. Procédé selon l'une quelconque des revendications 9 à 20, caractérisé en ce que le dispositif (18) est commandé de façon telle par un calculateur de commande numérique
- que, par détection, seulement les impuretés sont cokéfiées,
- que, lors de la coupe électroérosive, plusieurs processus de nettoyage et/ou de traitement de surface sont exécutés, et
- que, lors d'un contrôle de programme, le dispositif (18) est mis hors tension.
